# EUROPEAN PATENT APPLICATION

(11) **EP 0 614 066 A1**
(43) Date of publication of application: **07.09.1994**
(21) Application number: 93500025.7
(22) Date of filing: 01.03.1993
(51) Int. Cl.: G01B 7/34, G01N 3/42

(54) **Device to measure depth and hardness using two equal load cells**

(71) Applicant: Las Navas Garcia, José Maria, E-28210 Madrid (ES)
(72) Inventor: Las Navas Garcia, José Maria, E-28210 Madrid (ES)

(57) **Abstract**

**1**^{**º**} Both load cells are fixed together and fixed to the stand **(F)**
**2**^{**º**} The moving part of the load cells are free to move, not having contact between them or with the stand **(F)**
**3**^{**º**} The rod **(C)** is fixed to the load cell **(A)**, the tube **(D)** is fixed to the load cell **(B),** the rod and the tube do not touch.
**4**^{**º**} The load cell **(A)** funtions inverted to load cell **(B).**
**5**^{**º**} The load cells as they are in the drawing, we adjust the cell outputs to be zero.
**6**^{**º**} The rod **(C)** is above the level of the bottom of tube **(D).**
**7**^{**º**} A sample **(E)** moving upward pushing tube **(D)** will generate a signal in load cell **(B),** further on, sample **(E),** will touch rod **(C)** generating a signal on load cell **(A).** At this moment we measure both signals, the difference in amplitude of both signals, represent a distance (example 200 microns), if we continue to push sample **(E)** this difference in signal between the load cells, will be constant to the top range of the load cells.

**DEPTH MEASUREMENT**

**8**^{**º**} Sample **(E)** with a hole centered, superior in diameter to rod **(C)** and inferior in diameter to tube **(D),** when moving sample **(E)** upward the rod penetrates the hole in sample **(E),** the difference in amplitude of signals from both load cells can not be equal (example 200 microns) to the measurement of point **7**^{**º**}**.** When sample **(E)** touches both tube **(D)** and rod **(C)** we take both load cells signal measurement. We subtract the difference in amplitude of signals in point **7**^{**º**} to the difference in amplitude of signals in point **8**^{**º**} the result is the hole depth.

**HARDNESS MEASUREMENT**

**9**^{**º**} We install a Vickers Knoop or Rockwell penetrator on the point of rod **(C),** it does not touch tube **(D).** We push sample **(E)** upward until it touches lightly the penetrator on rod **(C)** we now take signal measurement of both load cells, we obtain the difference between both signals (reading **1**).
We keep pushing sample **(E)** until we reach the load wanted, we now take signal measurement of both load cells, we obtain the difference between both signals (reading **2**).
We substract (reading **1**) from (reading **2**) and the result is the distance the penetrator has penetrated sample **(E).**
Hardness is now calculated as a function of depth and load applied.

## Description

The invention I am patenting uses two load cells to measure distances with precision of 0.04 microns.

Load cells have a special resistance attched to them, this resistance varies when the dimensions of the metal contract or expand, this variation in resistance is converted to voltage, amplified, converted to digital and then to weight.

Since we know the distance a particular load cell deflects for a known weight, 0.5 mm distance from zero grams to 2.000 grams in one case, we can find that each gram deflects the load cell 0.25 microns per gram.

This property of measuring distances as a function of load applied plus the capability to measure distances compairing the signals (voltage) of two equal load cells allows us, to perform very precise distance measurements.

### APPLICATIONS AND ADVANTAGES

The invention I am patenting increases the measuring techniques to :
* Flatness measurement
* Roundness measurement
* Roughness measurement
* Layer thickness measurement
* Dimensional measurement
* Hardness measurement

### DRAWING N^{º} 1

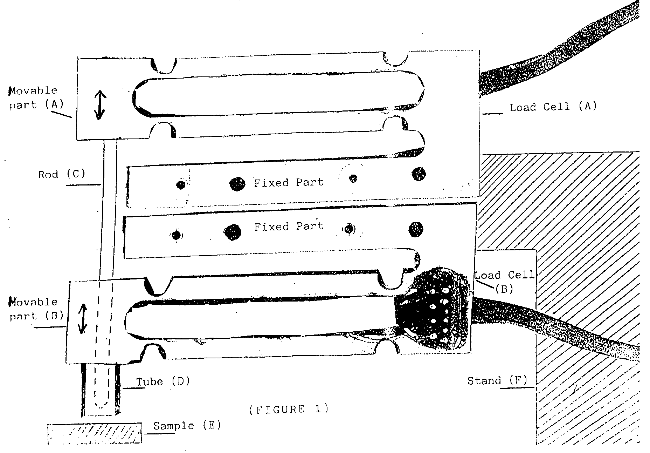

**1**^{**º**} Both load cells are fixed together and fixed to the stand **(F)**
**2**^{**º**} The moving part of the load cells are free to move, not having contact between them or with the stand **(F)**
**3**^{**º**} The rod **(C)** is fixed to the load cell **(A)**, the tube **(D)** is fixed to the load cell **(B)**, the rod and the tube do not touch.
**4**^{**º**} The load cell **(A)** funtions inverted to load cell **(B)**.
**5**^{**º**} The load cells as they are in the drawing, we adjust the cell outputs to be zero.
**6**^{**º**} The rod **(C)** is above the level of the bottom of tube **(D)**.
**7**^{**º**} A sample **(E)** moving upward pushing tube **(D)** will generate a signal in load cell **(B)**, further on, sample **(E),** will touch rod **(C)** generating a signal on load cell **(A)**. At this moment we measure both signals, the difference in amplitude of both signals, represent a distance (example 200 microns), if we continue to push sample **(E)** this difference in signal between the load cells, will be constant to the top range of the load cells.

### DEPTH MEASUREMENT

**8**^{**º**} Sample **(E)** with a hole centered, superior in diameter to rod **(C)** and inferior in diameter to tube **(D)**, when moving sample **(E)** upward the rod penetrates the hole in sample **(E)**, the difference in amplitude of signals from both load cells can not be equal (example 200 microns) to the measurement of point **7**^{**º**}. When sample **(E)** touches both tube **(D)** and rod **(C)** we take both load cells signal measurement. We subtract the difference in amplitude of signals in point **7**^{**º**} to the difference in amplitude of signals In point **8**^{**º**} the result is the hole depth.

### HARDNESS MEASUREMENT

**9**^{**º**} We install a Vickers Knoop or Rockwell penetrator on the point of rod **(C)**, it does not touch tube **(D)**. We push sample **(E)** upward until it touches lightly the penetrator on rod **(C)** we now take signal measurement of both load cells, we obtain the difference between both signals (reading **1**).
   We keep pushing sample **(E)** until we reach the load wanted, we now take signal measurement of both load cells, we obtain the difference between both signals (reading **2**).
   We substract (reading **1**) from (reading **2**) and the result is the distance the penetrator has penetrated sample **(E)**.
   Hardness is now calculated as a function of depth and load applied.

## Claims

1. I claim as new and exclusive property to developes , produce and sell :
**DEVICE TO MEASURE DIMENSIONS USING TWO LOAD CELLS FOR:**
* Flatness measurement
* Roundness measurement
* Roughness measurement
* Layer thickness measurement
* Dimensional measurement

2. I claim as new and exclusive property to developes , produce and sell :
**DEVICE TO MEASURE DEPTH CREATED BY AN INDENTOR VICKERS KNOOP OR ROCKWELL USING TWO LOAD CELLS AND LATER CONVERSION TO HARDNESS AS A FUNCTION OF LOAD APPLIED.**
